# EUROPÄISCHE PATENTANMELDUNG

(11) **EP 0 974 805 A2**
(43) Veröffentlichungstag der Anmeldung: **26.01.2000**
(21) Anmeldenummer: 99114133.4
(22) Anmeldetag: 19.07.1999
(51) Int. Cl.: F28D 9/00, F28F 21/06, F24F 12/00

(54) **Wärmetauscher aus Kunststoff und Verfahren zu seiner Herstellung sowie Klimatisierungseinheit**

(30) Priorität: 24.07.1998 DE 19833366
(71) Anmelder: Söhner Kunststofftechnik GmbH, 74193 Schwaigern (DE); Götz Heizsysteme GmbH, 74374 Zaberfeld (DE)
(72) Erfinder: Doll, Theo, Dr., 74193 Schwaigern (DE); Götz, Oskar, 74374 Zaberfeld (DE)
(74) Vertreter: Wilhelm & Dauster Patentanwälte European Patent Attorneys

(57) **Zusammenfassung**

Kunststoffwärmetauscher, der Strömungskanäle für eine Führung von zwei Fluiden im Gegenstromprinzip aufweist und der dreiteilig aus einem Deckteil (1), einer zumindest teilweise die Strömungskanäle bildenden Zwischenlage (2) und einem Wannenteil (3) gebildet ist, wobei die Zwischenlage (2) als Tiefziehteil gestaltet und derart mit zueinander beabstandeten, von einer Vorderseite her tiefgezogenen Kanalabschnitten (8) des Strömungskanales für das erste Fluid versehen ist, daß die zwischen den Kanalabschnitten verbleibenden Gegenabschnitte (9) auf der Rückseite den Strömungskanal des gegengeführten zweiten Fluides bilden, wobei die die Kanal- und die Gegenabschnitte (8,9) trennenden Wandungsbereiche als Wärmeübetragungsmembranen ausgebildet sind.

Einsatz für die Heiztechnik und Klimatisierung von Gebäuden.

## Beschreibung

Die Erfindung betrifft einen Wärmetauscher aus Kunststoff, der Strömungskanäle für eine Führung von zwei Fluiden im Gegenstromprinzip aufweist, sowie ein Verfahren zu seiner Herstellung und eine Klimatisierungseinheit.

Aus der DE 39 12 628 A1 ist ein Wärmetauscher aus dünnwandigem Kunststoffmaterial bekannt, der im Gegenstromprinzip aufgebaut ist. Der Wärmetauscher besteht aus drei voneinander lösbaren Elementen.

Aus einem Prospekt Pro condens der Fa. Götz Heizsysteme GmbH ist es bekannt, für die Heizungstechnik einen einem Heizkessel aus Stahl zugeordneten Kunststoffwärmetauscher vorzusehen. Der Kunststoffwärmetauscher arbeitet im Gegenstromprinzip, wobei in der einen Richtung eine vom Heizbrenner angesaugte Frischluft und in der anderen Richtung das heiße Abgas strömt. Die dem Heizbrenner zugeführte Frischluft wird somit bereits vorgewärmt. Gleichzeitig wird das Abgas abgekühlt und teilweise kondensiert. Der Aufbau des Kunststoffwärmetauschers ist in dem genannten Prospekt nicht beschrieben.

Aufgabe der Erfindung ist es, einen Wärmetauscher sowie ein Verfahren der eingangs genannten Art zu schaffen, die eine einfache und funktionssichere Wärmeübertragung gewährleisten.

Diese Aufgabe wird dadurch gelöst, daß der Wärmetauscher dreiteilig aus einem Deckteil, einer zumindest teilweise die Strömungskanäle bildenden Zwischenlage und einem Wannenteil gebildet ist, wobei die Zwischenlage einstückig gestaltet und derart mit zueinander beabstandeten, von einer Vorderseite hin offenen Kanalabschnitten des Strömungskanales für das erste Fluid versehen ist, daß die zwischen den Kanalabschnitten verbleibenden Gegenabschnitte auf der Rückseite den Strömungskanal des gegengeführten, zweiten Fluides bilden, wobei die die Kanal- und die Gegenabschnitte trennenden Wandungsbereiche als Wärmeübertragungsmembranen ausgebildet sind, und daß der Deckteil und der Wannenteil derart dicht mit der Zwischenlage verbunden sind, daß die Kanal- und Gegenabschnitte zu den Strömungskanälen für die beiden Fluide ergänzt sind. Unter Fluiden im Sinne der Erfindung sind sowohl Gase als auch Flüssigkeiten zu verstehen. Dadurch wird in einfacher Weise mittels lediglich eines einzelnen Bauteiles, nämlich der Zwischenlage sowohl die Anordnung des einen Strömungskanales als auch entsprechend entgegengesetzt die Anordnung des anderen Strömungskanales geschaffen. Die Kanalabschnitte werden derart als Wärmeübertragungsmembranen ausgeführt, daß die Wandungsbereiche zwischen den Kanal- und den Gegenabschnitten eine ausreichende Wärmeübertragung zwischen den gegenströmenden Fluiden ermöglichen. Diese Funktion kann durch entsprechende Dünnwandigkeit, durch Einsatz zusätzlicher Membranen und/oder durch geeignete Strömungsführungen wie Turbulenzelementen oder ähnliches erfolgen. Die Wärmeübertragungsmembrane können auch durch entsprechende Profilierungen gebildet sein, so daß die benachbarten Fluide eine ausreichende Zeit für die jeweilige Wärmeübertragung durch die Wandungsbereiche hindurch zur Verfügung haben. Vorzugsweise sind die Strömungskanäle schlangenlinien- oder zickzackförmig geführt, so daß die gegenüberliegenden Kanal- oder Gegenabschnitte jeweils zwischen den anderen Kanal- oder Gegenabschnitten gelegen sind. Die geschlossenen Strömungskanäle auf beiden Seiten werden durch den jeweils dichten Abschluß des Deckteiles bzw. des Wannenteiles erzielt.

In Ausgestaltung der Erfindung ist die Zwischenlage als Tiefziehteil gestaltet und die Wandungsbereiche sind derart dünnwandig tiefgezogen, daß eine ausreichende Wärmeübertragung zwischen den vorbeiströmenden Fluiden erfolgt. Dies ist eine besonders einfache Gestaltung von Wärmeübertragungsmembranen.

In weiterer Ausgestaltung der Erfindung sind der Deckteil und die Zwischenlage gemeinsam in einem Twinsheet-Verfahren hergestellt. Dies ist eine besonders einfache robuste Herstellungsart, die für eine hohe Steifigkeit des Wärmetauschers und für die dichte Verbindung zwischen dem Deckteil und der Zwischenlage sorgt. Bei dem Twinsheet-Verfahren werden zwei Kunststoffplatten, vorliegend die Platten für Deckteil und Zwischenlage, gemeinsam durch Tiefziehen thermisch verformt und anschließend in der gewünschten Gestaltung thermofixiert.

In weiterer Ausgestaltung der Erfindung sind die Wandungsbereiche mit Turbulenzprofilierungen versehen. Die Wärmeübertragung wird dadurch weiter verbessert.

Für eine gute Wärmeisolierung und -übertragung sind der Deckteil, die Zwischenlage und der Wannenteil dunkel, vorzugsweise schwarz eingefärbt.

In weiterer Ausgestaltung der Erfindung sind die Kanalabschnitte und die auf der Rückseite korrespondierend ausgebildeten Gegenabschnitte jeweils zickzackförmig geführt, wobei sich jeweils U-förmige Umlenkbereiche ergeben. Dies ist eine besonders vorteilhafte Gestaltung der Kanalabschnitte und der Gegenabschnitte, da auf vergleichsweise geringer Fläche eine große Länge der Strömungskanäle und damit auch eine große Wärmeübertragungsfläche erzielbar sind. Bei guter Wärmeübertragung ist somit zusätzlich ein kompakter Aufbau erzielbar.

In weiterer Ausgestaltung der Erfindung weisen die Strömungskanäle auf Höhe der Umlenkbereiche zumindest weitgehend die gleichen Strömungsquerschnitte auf wie im Bereich der zugeordneten Kanal- oder Gegenabschnitte. Dadurch werden für beide Strömungskanäle zumindest weitgehend gleichbleibende Strömungsdruckverhältnisse erzielt, wodurch ein einwandfreier und funktionssicherer Betrieb des Wärmetauschers gewährleistet ist.

In weiterer Ausgestaltung der Erfindung sind der Deckteil und/oder der Wannenteil lösbar mit der Zwischenlage verbunden. Dadurch ist es möglich, Verunreinigungen innerhalb des Wärmetauschers zu entfernen. Besonders vorteilhaft ist die Zwischenlage von dem Wannenteil lösbar, da sich im Wannenteil Kondensat und in diesem Kondensat Verunreinigungen ansammeln, die von Zeit zu Zeit in einfacher Weise entfernt werden können.

In weiterer Ausgestaltung der Erfindung sind der Deckteil und der Wannenteil derart aufeinander abgestimmt profiliert, daß zwei oder mehr dreiteilige Wärmetauschereinheiten übereinander stapelbar sind. Dies ist besonders vorteilhaft, falls der Wärmetauscher größeren Strömungsmengen oder größeren Temperaturunterschieden zwischen den Fluiden ausgesetzt ist, die durch eine einzelne Einheit nicht ausreichend verändert werden könnten. Die Stapelung mehrerer Wärmetauschereinheiten ermöglicht bei verbesserter Wärmeübertragung zusätzlich einen kompakten Aufbau des gebildeten Gesamtwärmetauschers.

In weiterer Ausgestaltung der Erfindung sind die Anschlußöffnungen im Deckteil und im Wannenteil derart korrespondierend zueinander profiliert, daß bei wenigstens zwei übereinandergestapelten Wärmetauschereinheiten die korrespondierenden Anschlußöffnungen von Deckteil und benachbartem Wannenteil ineinandersteckbar sind. Zusätzliche Anschlußverbindungen zwischen den übereinanderliegenden Wärmetauschereinheiten werden dadurch vermieden.

Klimatisierungseinheiten, die durch dezentrale Lüftungssysteme einschließlich Wärmerückgewinnung für Wohn- und Geschäftsräume gebildet sind, sind allgemein bekannt. Diese benötigen jedoch neben einem hohen Platzbedarf einen hohen Aufwand an Installationen.

Aufgabe der Erfindung ist es, eine Klimatisierungseinheit für geschlossene Räume, insbesondere Wohn- und Geschäftsräume, zu schaffen, die mit möglichst geringem Installationsaufwand funktionsbereit ist.

Diese Aufgabe wird erfindungsgemäß durch eine Klimatisierungseinheit für geschlossene Räume, insbesondere einen Wohnoder Geschäftsraum, gelöst, die einen Lufteintritt, der einer ersten Verbindung des Rauminneren zu einer Außenumgebung zugeordnet ist, und einen zu dem Lufteintritt beabstandeten Luftaustritt aufweist, der einer zweiten Verbindung des Rauminneren zu einer Außenumgebung zugeordnet ist, und die eine Ventilatoranordnung aufweist, die dem Lufteintritt und/oder dem Luftaustritt zugeordnet ist, wobei sowohl der Lufteintritt als auch der Luftaustritt an einen erfindungsgemäßen Wärmetauscher angeschlossen sind. Dadurch ist es möglich, den zuvor ausführlich beschriebenen, erfindungsgemäßen Wärmetauscher in einfacher Weise zur Raumlüftung mit Wärmerückgewinnung und damit zur Klimatisierung eines Raumes abhängig von klimatischen Außen- und Raumbedingungen vorzusehen. Durch den Einsatz des Gegenstromwärmetauschers wird lediglich ein äußerst geringer Installationsaufwand benötigt, da der entsprechende Wärmetauscher direkt im Bereich einer Wandung des jeweiligen Raumes positioniert sein kann und lediglich eine entsprechende Anzahl von Durchtritten durch die Wandung nach außen benötigt. Neben dem Einsatz zur Wärmerückgewinnung in kalten Jahreszeiten ist durch die erfindungsgemäße Lösung insbesondere ein Einsatz in mit Klimaanlagen versehenen Räumen vorteilhaft, da in diesem Fall die bei einer entsprechenden Lüftung nach außen abgegebene, durch die Klimaanlage bereits gekühlte Raumluft zur Vorkühlung der eintrittsseitig einströmenden warmen Außenluft der Umgebung dienen kann. Dadurch ergibt sich eine erhebliche Energieeinsparung, da die einströmende Außenluft im Wärmetauscher bereits durch Wärmeübertragung mit der ausströmenden Raumluft eine gewisse Vorkühlung erfahren hat.

In Ausgestaltung dieser Erfindung ist die Ventilatoranordnung durch eine Steuer- oder Regelungseinheit betätigbar. Dadurch ist eine kontrollierte Be- und Entlüftung des jeweiligen Raumes erzielbar. Vorzugsweise weist die Regelungseinheit wenigstens einen in den Luftein- und/oder Luftaustritt eingebrachten Istwert-Sensor auf, dessen Signale mit wenigstens einem Sollwertgeber verglichen werden und abhängig von dem Ergebnis des Vergleichs eine Ansteuerung der Ventilatoranordnung vorgenommen wird. Die Istwertsensoren sind insbesondere zur Temperatur-, Luftfeuchtigkeits- und CO₂-Gehalterfassung der einund/oder austretenden Luft ausgestaltet. Vorzugsweise ist der Sollwertgeber Teil einer Mikroprozessoreinheit, an die mehrere Istwert-Sensoren für unterschiedliche Datenerfassungen anschließbar sind. Unter Einsatz einer grundsätzlich bekannten Volumenstrommessung kann abhängig von den entsprechenden Parametern eine Luftmengenregelung und eine äußerst gleichmäßige, energiesparende Temperierung der Raumluft erzielt werden.

In weiterer Ausgestaltung der Erfindung ist dem Lufteintritt eine Filteranordnung zugeordnet. Diese kann durch ein einfaches Schutzgitter zur Abwehr von grobem Schmutz und Insekten, oder durch ein Vliesgitter mit elektrostatischen Eigenschaften zur Bindung von Staub und Pollen, durch einen Aktivkohlefilter zur Bindung von schädlichen Gasen und Aerosolen oder gar durch einen Hochspannungsfilter aus auf ca. 10 kV aufgeladenen Kondensatorplatten zur Bindung von Feinststaub und Bakterien gebildet sein. Vorzugsweise ist die Filteranordnung auswechselbar in einem Gehäuse des Wärmetauschers angeordnet. Dadurch können die Filtereinsätze vorzugsweise durch entsprechende Steckverbindungen herausgenommen und gereinigt oder gewechselt werden.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in einer längsgeschnittenen Explosionsdarstellung eine Ausführungsform eines erfindungsgemäßen Wärmetauschers, der mit einem Deckteil, einer Zwischenlage und einem Wannenteil versehen ist,
- Fig. 2: den Wärmetauscher in einer weiteren Explosionsdarstellung ähnlich Fig. 1, wobei Deckteil und Zwischenlage bereits zusammengefügt sind,
- Fig. 3: eine Draufsicht auf die Zwischenlage nach den Fig. 1 und 2,
- Fig. 4: einen Längsschnitt durch die Zwischenlage nach Fig. 3 entlang der Schnittlinie IV-IV in Fig. 3,
- Fig. 5: eine Seitenansicht der Zwischenlage nach Fig. 3 in Richtung des Pfeiles V in Fig. 3,
- Fig. 6: eine erste Stirnansicht der Zwischenlage nach Fig. 3 in Richtung des Pfeiles VI in Fig. 3,
- Fig. 7: eine gegenüberliegende Stirnansicht der Zwischenlage nach Fig. 3 in Richtung des Pfeiles VII in Fig. 3,
- Fig. 8: eine Seitenansicht des Deckteiles nach den Fig. 1 und 2,
- Fig. 9: eine Draufsicht auf das Deckteil nach Fig. 8 in Richtung des Pfeiles IX in Fig. 8,
- Fig. 10: einen Längsschnitt durch das Deckteil nach Fig. 9 entlang der Schnittlinie X-X in Fig. 9,
- Fig. 11: eine Stirnansicht des Deckteiles nach Fig. 9 in Richtung des Pfeiles XI in Fig. 9,
- Fig. 12: eine Draufsicht auf den Wannenteil nach den Fig. 1 und 2,
- Fig. 13: eine Seitenansicht des Wannenteiles nach Fig. 12 in Richtung des Pfeiles XIII in Fig. 12,
- Fig. 14: einen Längsschnitt durch das Wannenteil nach Fig. 12 entlang der Schnittlinie XIV-XIV in Fig. 12,
- Fig. 15: eine erste Stirnansicht des Wannenteiles nach Fig. 12 in Richtung des Pfeiles XV in Fig. 12,
- Fig. 16: eine gegenüberliegende Stirnansicht des Wannenteiles nach Fig. 12 in Richtung des Pfeiles XVI in Fig. 12,
- Fig. 17: einen Schnitt durch eine Gebäudeaußenwand, an deren Innenseite eine Ausführungsform einer erfindungsgemäßen Klimatisierungseinheit angeordnet ist und
- Fig. 18: eine Frontansicht der Klimatisierungseinheit nach Fig. 17.

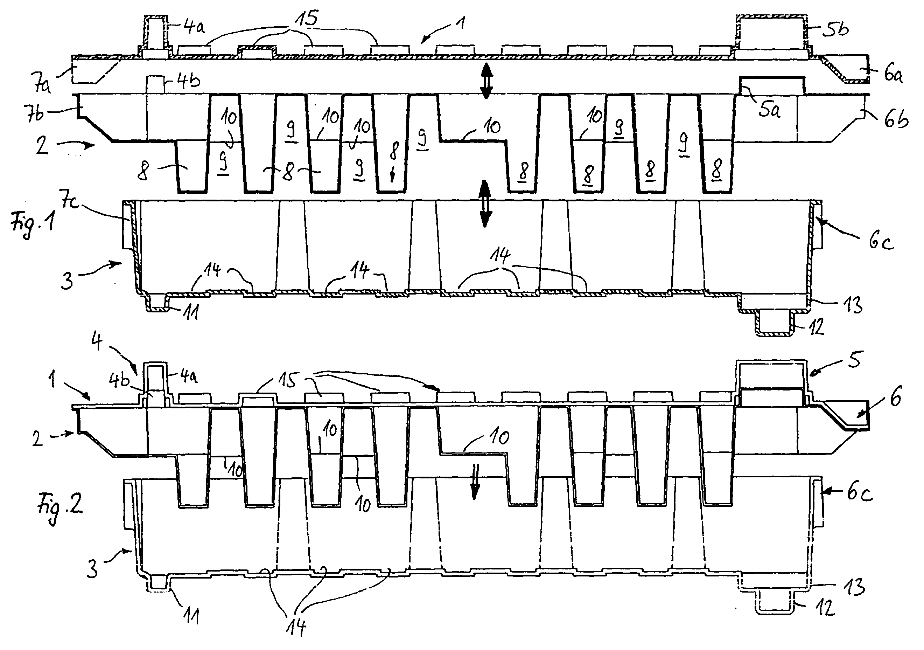

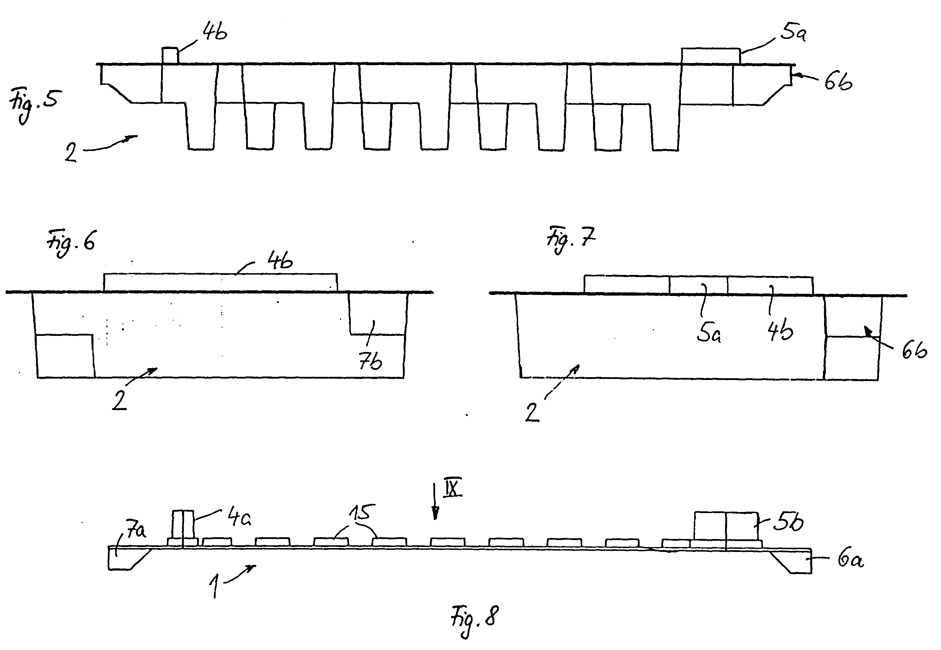

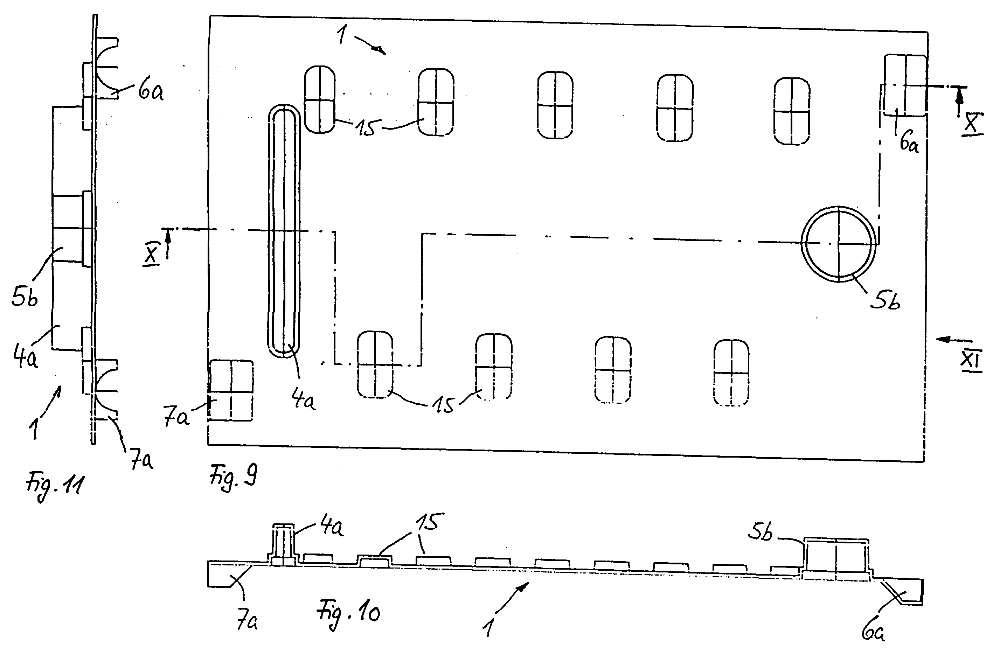

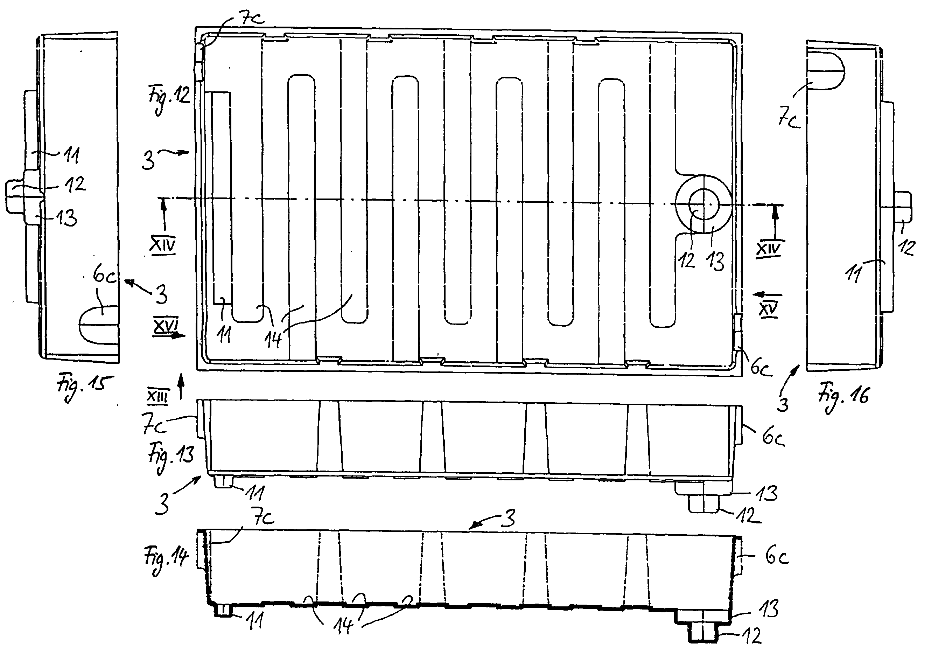

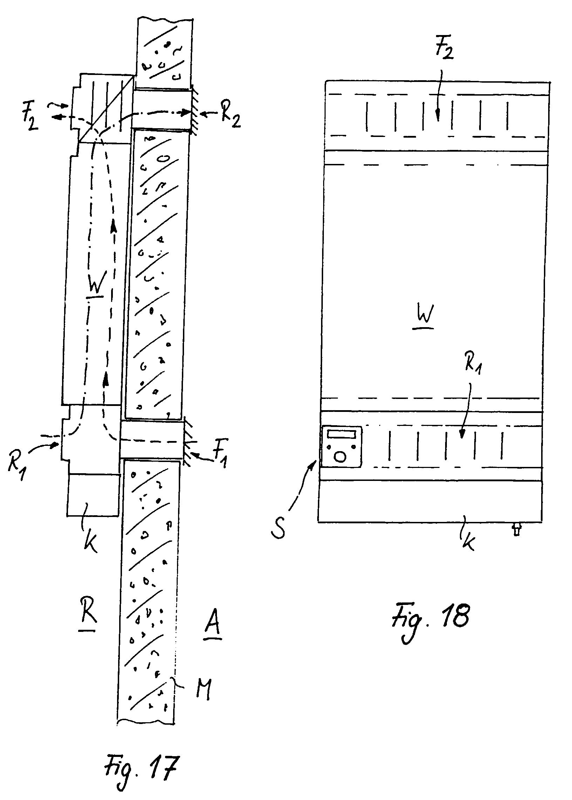

Ein Wärmetauscher 1, 2, 3 nach den Fig. 1 bis 16 ist aus Kunststoff hergestellt und wird für die Heiz- und Klimatechnik von Gebäuden eingesetzt. Dabei ist der Wärmetauscher 1, 2, 3 in nicht näher dargestellter Weise einem Heizbrenner eines Heizkreislaufes zugeordnet. Der Wärmetauscher 1, 2, 3 ist als Gegenstromwärmetauscher ausgeführt, wobei als erstes Fluid in der einen Strömungskanalanordnung Frischluft dem Heizbrenner zugeführt und in dem Wärmetauscher 1, 2, 3 erwärmt und in der entsprechenden Gegenstromführung Abgas, d.h. Rauchgas, vom Heizbrenner durch den Wärmetauscher 1, 2, 3 hindurchgeführt und abgekühlt wird. Die Erfindung ist jedoch nicht auf diese Kombination aus Frischluft und Rauchgas beschränkt, sondern kann in gleicher Weise zur Gegenstromführung anderer Gase und Flüssigkeiten vorgesehen sein.

Der Wärmetauscher setzt sich aus drei Kunststoffbauteilen, nämlich aus einem Deckteil 1, einer Zwischenlage 2 sowie einem Wannenteil 3 zusammen. Der Deckteil 1 und die Zwischenlage 2 sind in einem gemeinsamen Twinsheet-Verfahren hergestellt, wobei in grundsätzlich bekannter Weise jeweils zwei Kunststoffplatten in geeigneten Vorrichtungen gemeinsam tiefgezogen und anschließend thermofixiert werden. Der Wannenteil 3 kann in einem einfachen Tiefziehverfahren hergestellt sein. Die Zwischenlage 2 stellt den eigentlichen Funktionsteil des Wärmetauschers dar, da die Zwischenlage 2 derart tiefgezogen ist, daß sich durch entsprechende Profilierung zueinander parallele Kanalabschnitte 8 sowie zwischen diesen, ebenfalls parallel, liegende domartige Rippen ergeben, die Gegenabschnitte 9 bilden. Die Kanalabschnitte 8 und die Gegenabschnitte 9 weisen die gleichen freien Strömungsquerschnitte auf, wobei die Gegenabschnitte 9 die entsprechend negative Form zu den Kanalabschnitten 8 bilden und zu einer Unterseite hin offen sind. Die Kanalabschnitte 8 hingegen sind zu einer Oberseite hin offen. Sowohl die Kanalabschnitte 8 als auch die Gegenabschnitte 9 sind jeweils untereinander durch Umlenkbereiche 10 zickzackartig verbunden, die U-förmig umgelenkte Eckbereiche bilden. In der Draufsicht sind die Umlenkbereiche 10 quadratisch gestaltet, wobei sie eine Tiefe aufweisen, die der halben Tiefe der Kanalabschnitte 8 oder der Gegenabschnitte 9 entspricht. Die Breite jedes Umlenkbereiches 10 entspricht der doppelten Breite eines Kanalabschnittes 8 oder eines Gegenabschnittes 9. In den Umlenkbereichen 10 ergeben sich somit sowohl auf der Seite der Kanalabschnitte 8, die als Vorderseite bezeichnet wird, als auch auf der Seite der Gegenabschnitte 9, die als Rückseite bezeichnet wird, ungefähr gleiche Strömungsquerschnitte sowohl im Bereich der Kanalabschnitte 8 oder der Gegenabschnitte 9 als auch im jeweiligen Umlenkbereich 10.

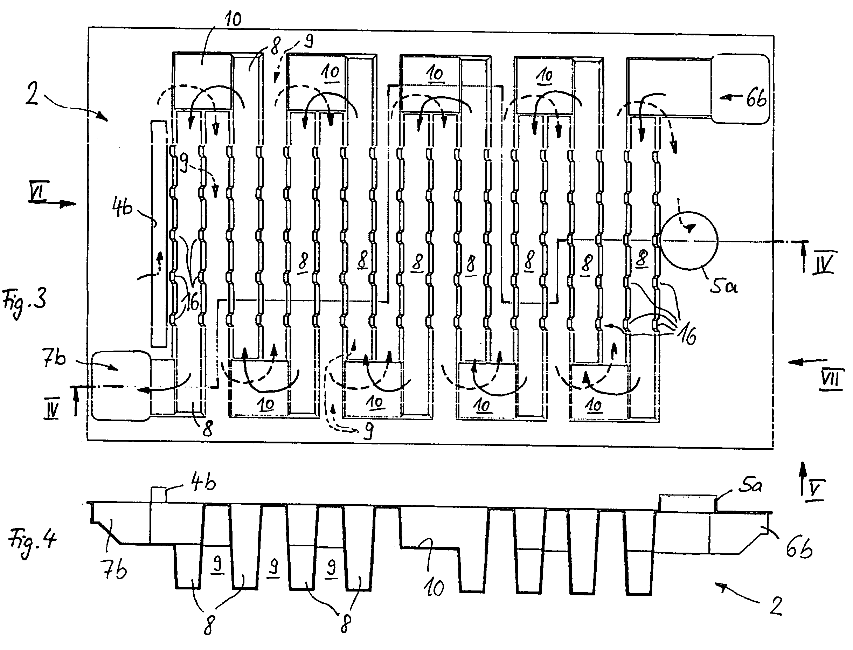

Dabei wird der durch die Kanalabschnitte 8 und die zugehörigen oberen Umlenkbereiche 10 sowie durch den dicht aufliegenden Deckteil 1 gebildete Strömungkanal durch die zickzackförmig verlaufenden, durchgezogenen Pfeile gemäß Fig. 3 verdeutlicht. Der auf der Unterseite liegende Strömungskanal, der durch die Gegenabschnitte 9 sowie die entsprechenden Unterseiten der Umlenkbereiche 10 und durch das dichte Ansetzen des Wannenteiles 3 gebildet wird, ist durch die gestrichelten Pfeile verdeutlicht. Der durch die durchgezogenen Pfeile dargestellte Strömungskanal dient zur Führung von Frischluft, der untenliegende Strömungskanal dient zur Führung von Rauchgas. Ein Frischlufteintritt befindet sich im Eintrittsbereich 6b, ein Frischluftaustritt im Austrittsbereich 7b. Ein Rauchgaseintritt ist auf Höhe der schlitzartigen Rippe 4b und ein Rauchgasaustritt an einem Austrittsstutzen 5a vorgesehen. Der Frischlufteintritt 6 sowie der Frischluftaustritt 7a, 7b, 7c wie auch der Rauchgaseintritt 4a, 4b und der Rauchgasaustritt 5a, 5b werden nicht allein durch die entsprechenden Profilierungen in der Zwischenlage 2, sondern ergänzend auch durch korrespondierende Profilierungen in dem Deckteil 1 und dem Wannenteil 3 definiert. Für Rauchgaseintritt und Rauchgasaustritt sind im Deckteil 1 korrespondierende, dom- oder kanalartige Ausformungen 4a, 5b vorgesehen, die auf die entsprechenden Profilierungen 4b, 5a der Zwischenlage 2 aufgesteckt werden (Fig. 2). Frischlufteintritt 6 und Frischluftaustritt 7a, 7b, 7c werden durch zueinander korrespondierende Anformungen 6a, 6b, 6c sowie 7a, 7b, 7c gebildet, die gemeinsam jeweils einen Rohranschlußstutzen definieren.

Alle drei Bauteile, d.h. sowohl der Deckteil 1 als auch die Zwischenlage 2 und der Wannenteil 3 werden jeweils durch Tiefziehen hergestellt. Dabei werden der Deckteil 1 und die Zwischenlage 2 durch ein Twinsheet-Verfahren gemeinsam tiefgezogen, so daß sich in einem Arbeitsgang bereits die dichte Verbindung gemäß Fig. 2 zwischen dem Deckteil 1 und der Zwischenlage 2 ergibt. Die domartigen Rippen 4a, 4b im Bereich des Rauchgaseintrittes 4 wie auch im Bereich des Rauchgasaustrittes 5 ragen formschlüssig ineinander. Die Oberflächen der Zwischenlage 2 sind insbesondere auf Höhe der Gegenabschnitte 9 mit der Unterseite des Deckteiles 1 durch den Twinsheet-Prozeß stoffschlüssig miteinander verbunden. Auch der Randbereich der Zwischenlage 2 und des Deckteiles 1 sind umlaufend dicht miteinander verbunden, so daß sich ein abgeschlossener Strömungskanal für die Frischluft ergibt. Auf Höhe der Umlenkbereiche 10 sind im Deckteil 1 Erhöhungen 15 vorgesehen, die die Durchströmung des Strömungskanales für die Frischluft weiter vergleichmäßigen. Die Erhöhungen 15 ergänzen somit die Gestaltungen der Umlenkbereiche 10, so daß gemeinsam in allen Bereichen des Strömungskanales zumindest weitgehend gleiche Strömungsquerschnitte erzielt werden.

Der Wannenteil 3 ist durch einfaches Tiefziehen hergestellt und weist an seinen Wandungen nicht näher bezeichnete Rippenprofilierungen auf, die zu seinem oberen Rand hin verjüngt sind und zur Versteifung der Wandungen des Wannenteiles 3 dienen. Im Boden des Wannenteiles 3 ist auf einer in Fig. 2 linken Seite (siehe auch Fig. 12 bis 14) eine nutartige Ausformung 11 vorgesehen, die auf den Rauchgaseintritt 4 des Deckteiles 1 und der Zwischenlage 2 abgestimmt ist. Diese Ausformung 11 ist vorgesehen, falls mehrere Wärmetauschereinheiten übereinandergestapelt sind, die im Parallelbetrieb gefahren werden. Die Ausformung 11 stellt somit einen Rauchgasanschluß dar. Gleiches gilt für eine domartige Ausformung 13 auf der gegenüberliegenden Seite des Bodens des Wannenteiles 3. Diese ist auf den Rauchgasaustritt 5 abgestimmt und dient ebenfalls als Rauchgasanschluß bei einer Parallelschaltung von wenigstens zwei Wärmetauschern gemäß den Fig. 1 und 2. An die Ausformung 13 schließt eine abgestufte domartige Ausformung 12 nach unten an, die einen Kondensatablaß darstellt, falls lediglich ein einzelner Wärmetauscher vorgesehen ist, oder dieser Wärmetauscher den untersten Wärmetauscher eines Wärmetauscherstapels darstellt. Je nach Bedarf wird somit entweder der Kondensatablaß in Funktion versetzt, indem er mit einem entsprechenden Anschluß versehen ist, oder der Rauchgasanschluß 13, in dem in einfacher Weise der Kondensatablaß 12 entfernt wird.

Der Wannenteil 3 wird lösbar mit der Twinsheet-Einheit 1, 2 aus dem Deckteil 1 und der Zwischenlage 2 verbunden, wobei zur lösbaren Verbindung über den Umfang des Wärmetauschers verteilte Schraubverbindungen vorgesehen sind. Es sind jedoch auch andere lösbare Verbindungsmittel einsetzbar. Ergänzend können der Wannenteil 3 und die Twinsheet-Einheit 1, 2 im oberen Randbereich des Wannenteiles 3 umlaufend miteinander verklebt sein, um eine ausreichende Abdichtung zwischen Wannenteil 3 und Twinsheet-Einheit 1, 2 zu erzielen. Diese Verklebung ist jedoch so ausgeführt, daß die Bauteile bei einem Lösen der Twinsheet-Einheit 1, 2 von dem Wannenteil 3 nicht beschädigt werden.

Der Boden des Wannenteiles 3 ist zudem auf Höhe der Kanalabschnitte 8 mit flachen, nutartigen Vertiefungen 14 versehen, die im zusammengefügten Zustand des Wärmetauschers knapp unterhalb der Kanalabschnitte 8 positioniert sind. Während des Betriebs des Wärmetauschers sammelt sich in diesen Vertiefungen 14 Kondensat des durchgeführten Rauchgases an und dichtet den Wannenteil 3 zu dem jeweiligen Grund der Kanalabschnitte 8 hin ab. Eine zusätzliche dichte, stoffschlüssige oder anders gestaltete Verbindung zwischen den Kanalabschnitten der Zwischenlage 2 und dem Boden des Wannenteiles 3 wird somit vermieden, so daß die in den Vertiefungen 14 stehende Kondensatbildung die zickzackförmige Führung des Rauchgases durch die Gegenabschnitte 9 verbessert.

Die schräg nach unten bzw. nach oben verlaufenden Wandungsbereiche zwischen den benachbarten Kanalabschnitten 8 und Gegenabschnitten 9 sind relativ dünnwandig ausgeführt, um eine gute Wärmeübertragung zwischen den gegenströmenden Fluiden zu erzielen. Zusätzlich sind die Wandungsbereiche mit Turbulenzprofilierungen 16 (Fig. 3) versehen, die eine turbulente Strömung der Fluide in beiden Strömungskanälen gewährleisten. Die Turbulenzprofilierungen 16 sind steg- oder rippenartig gestaltet und verlaufen vertikal innerhalb der jeweiligen Wandungsbereiche zwischen den Kanalabschnitten 8 und den Gegenabschnitten 9.

Durch die lösbare Verbindung zwischen Wannenteil 3 und der Twinsheet-Einheit 1, 2 (Fig. 2) ist es möglich, den Wannenteil 3 je nach Bedarf von Zeit zu Zeit zu reinigen und insbesondere Ablagerungen der Kondensatbildung zu entfernen.

Bei einem nicht dargestellten Ausführungsbeispiel der Erfindung sind die Strömungsquerschnitte der Strömungkanäle über deren gesamte Länge derart temperaturabhängig auf Volumenänderungen der zu erwärmenden oder abzukühlenden Fläche abgestimmt, daß sich jeweils durchgehend homogene Strömungsverhältnisse ergeben.

Eine Klimatisierungseinheit zur Be- und Entlüftung eines Wohn- oder Geschäftsraumes R ist an einer Gebäudewand M positioniert, die den Raum R von einer Außenumgebung A abtrennt. Kernstück der Klimatisierungseinheit ist ein Wärmetauscher W, der dem Wärmetauscher des Ausführungsbeispiels nach den Fig. 1 bis 16 von Aufbau und Funktion her entspricht. Der Wärmetauscher W ist an der Gebäudewand M raumseitig, d.h. innenseitig, vertikal ausgerichtet angeordnet und sowohl an seiner Oberseite als auch an seiner Unterseite mit jeweils einem Wandadapter versehen. Beide Wandadapter weisen jeweils einen durch die Gebäudewand M hindurchführenden Luftführungsstutzen auf, wobei außenseitig jeweils ein Luftklappengitter vorgesehen ist. Der untere Luftführungsstutzen dient als Frischlufteintritt F₁ für in den Raum R von der Außenumgebung A geführte Frischluft. Der obere Luftführungsstutzen dient als Luftaustritt R₂ für aus dem Raum R herausgeführte Raumluft. Um eine kontrollierte Be- und Entlüftung zu erzielen, ist der Klimatisierungseinheit in nicht näher dargestellter Weise wenigstens ein Ventilator zugeordnet, der vorzugsweise in einem der beiden Wandungsadapter angeordnet ist und entweder Frischluft ansaugt oder Raumluft in die Außenumgebung A bläst. Anstelle eines einzelnen Ventilators können auch dem Luftein- und -austritt jeweils ein eigener Ventilator zugeordnet sein. Der obere Wandungsadapter weist zum Raum R nach innen gerichtet einen Frischlufteintritt F₂ auf. Entsprechend umgekehrt weist der untere Wandungsadapter einen Raumluftaustritt R₁ auf. Über den Gegenstromwärmetauscher W sind die Raumlufteintritte R₁ und R₂ wie auch die Frischlufteintritte F₁, F₂ gemäß schematisch gestrichelter bzw. strichpunktierter Darstellung miteinander verbunden, so daß innerhalb des Wärmetauschers W eine Wärmeübertragung zwischen einströmender Außenluft und ausströmender Raumluft erfolgt. Dem Frischlufteintritt F₁ oder F₂ ist eine Filteranordnung zugeordnet, die wahlweise als einfaches Schutzgitter, als Vliesgitter mit elektrostatischen Eigenschaften, als Aktivkohlefilter oder als Hochspannungsfilter gestaltet sein kann.

Um eine exakte Regelung der Lüftung und Belüftung zu erzielen, ist der Klimatisierungseinheit zudem eine Steuerungselektronik S zugeordnet, die insbesondere die Ansteuerung der Ventilatoren, abhängig von Messungen entsprechender Luftzustandskomponenten wie Temperatur, Luftfeuchte, CO₂-Gehalt und ähnliches, vornimmt. Mittels einer Volumenstrommessung ist zudem eine Luftmengenregelung realisierbar.

An einer Unterseite der Klimatisierungseinheit ist ein Kondensattank angeordnet, aus dem sich im Wärmetauscher sowie in den Wandungsadaptern ansammelndes Kondensat ableitbar ist.

## Patentansprüche

1. Wärmetauscher aus Kunststoff, der Strömungskanäle für eine Führung von zwei Fluiden im Gegenstromprinzip aufweist,
**dadurch gekennzeichnet**,
daß der Wärmetauscher dreiteilig aus einem Deckteil (1), einer zumindest teilweise die Strömungskanäle bildenden Zwischenlage (2) und einem Wannenteil (3) gebildet ist, wobei die Zwischenlage (2) einstückig gestaltet und derart mit zueinander beabstandeten, zu einer Vorderseite hin offenen Kanalabschnitten (8) des Strömungskanales für das erste Fluid versehen ist, daß die zwischen den Kanalabschnitten (8) verbleibenden Gegenabschnitte (9) auf der Rückseite den Strömungskanal des gegengeführten, zweiten Fluides bilden, wobei die die Kanal- und die Gegenabschnitte (8, 9) trennenden Wandungsbereiche als Wärmeübertragungsmembranen ausgebildet sind, und daß der Deckteil (1) und der Wannenteil (3) derart dicht mit der Zwischenlage (2) verbunden sind, daß die Kanalund Gegenabschnitte (8, 9) zu den Strömungskanälen für die beiden Fluide ergänzt sind.

2. Wärmetauscher nach Anspruch 1, dadurch gekennzeichnet, daß die Zwischenlage (2) als Tiefziehteil gestaltet ist, wobei die Wandungsbereiche derart dünnwandig tiefgezogen sind, daß eine ausreichende Wärmeübertragung zwischen den vorbeiströmenden Fluiden erfolgt.

3. Wärmetauscher nach Anspruch 1 oder 2, dadurch gekennzeichnet, daß der Deckteil (1) und die Zwischenlage (2) in einem Twinsheet-Verfahren gemeinsam hergestellt sind.

4. Wärmetauscher nach Anspruch 1, 2 oder 3, dadurch gekennzeichnet, daß die Wandungsbereiche mit Turbulenzprofilierungen (16) versehen sind.

5. Wärmetauscher nach Anspruch 1, dadurch gekennzeichnet, daß der Deckteil (1), die Zwischenlage (2) und der Wannenteil (3) dunkel, vorzugsweise schwarz, eingefärbt sind.

6. Wärmetauscher nach einem der vorhergehenden Ansprüche, dadurch gekennzeichnet, daß die Kanalabschnitte (8) und die auf der Rückseite korrespondierend ausgebildeten Gegenabschnitte (9) jeweils zickzackförmig geführt sind, wobei sich jeweils U-förmige Umlenkbereiche (10) ergeben.

7. Wärmetauscher nach Anspruch 6, dadurch gekennzeichnet, daß die Strömungskanäle auf Höhe der Umlenkbereiche (10) zumindest weitgehend die gleichen Strömungsquerschnitte aufweisen wie im Bereich der zugeordneten Kanal- oder Gegenabschnitte (8, 9).

8. Wärmetauscher nach Anspruch 6 oder 7, dadurch gekennzeichnet, daß die Strömungsquerschnitte der beiden Strömungskanäle derart auf Volumenänderungen der Fluide aufgrund von Erwärmungen oder Abkühlungen während des Durchströmens der Strömungskanäle abgestimmt sind, daß über die gesamte Länge der Strömungskanäle homogene Strömungsverhältnisse erreicht werden.

9. Wärmetauscher nach einem der vorhergehenden Ansprüche, dadurch gekennzeichnet, daß der Deckteil (1) und/oder der Wannenteil (3) lösbar mit der Zwischenlage (2) verbunden sind.

10. Wärmetauscher nach einem der vorhergehenden Ansprüche, dadurch gekennzeichnet, daß im Deckteil (1) und im Wannenteil (3) Anschlußöffnungen für Ein- und Auslaß der gegengeführten Strömungskanäle vorgesehen sind.

11. Wärmetauscher nach einem der vorhergehenden Ansprüche, dadurch gekennzeichnet, daß der Deckteil (1) und der Wannenteil (3) derart aufeinander abgestimmt profiliert sind, daß zwei oder mehr dreiteilige Wärmetauschereinheiten übereinanderstapelbar sind.

12. Wärmetauscher nach einem der vorhergehenden Ansprüche, dadurch gekennzeichnet, daß der Wannenteil (3) an seinem Boden mit Vertiefungen (14) versehen ist, die derart auf Höhe der tiefgezogenen Kanalabschnitte (8) angeordnet sind, daß sie im zusammengefügten Zustand des Wärmetauschers unter diesen Kanalabschnitten (8) liegen.

13. Verfahren zur Herstellung eines Kunststoffwärmetauschers zur Führung von Fluiden im Gegenstrombetrieb nach einem der vorhergehenden Ansprüche,
**dadurch gekennzeichnet**,
daß der Kunststoffwärmetauscher aus drei Teilen im Tiefziehverfahren hergestellt wird, wobei ein Deckteil (1) und eine Zwischenlage (2) durch einen Twinsheet-Prozeß gemeinsam in einem Arbeitsgang geformt werden.

14. Verfahren nach Anspruch 13, dadurch gekennzeichnet, daß die Zwischenlage (2) unter Bildung von Kanalabschnitten (8) auf einer Vorderseite sowie korrespondierenden Gegenabschnitten (9) auf einer Rückseite derart tiefgezogen wird, daß die Wandungsbereiche zwischen Kanalabschnitten (8) und Gegenabschnitten (9) für eine ausreichende Wärmeübertragung dünnwandig ausgeführt sind.

15. Verfahren nach Anspruch 13, dadurch gekennzeichnet, daß die Strömungsquerschnitte der Strömungskanäle derart dimensioniert werden, daß sich über die gesamte Länge der Strömungskanäle temperaturabhängig jeweils homogene Strömungsverhältnisse ergeben.

16. Klimatisierungseinheit für einen geschlossenen Raum, insbesondere einen Wohn- oder Geschäftsraum, mit einem Lufteintritt, der einer ersten Verbindung des Rauminneren zu einer Außenumgebung zugeordnet ist, sowie mit einem zu dem Lufteintritt beabstandeten Luftaustritt, der einer zweiten Verbindung des Rauminneren zu einer Außenumgebung zugeordnet ist, sowie mit einer Ventilatoranordnung, die dem Lufteintritt und/oder dem Luftaustritt zugeordnet ist, wobei Lufteintritt und Luftaustritt an einen Wärmetauscher nach einem der vorhergehenden Ansprüche angeschlossen sind.

17. Klimatisierungseinheit nach Anspruch 16, dadurch gekennzeichnet, daß die Ventilatoranordnung durch eine Steueroder Regelungseinheit betätigbar ist.

18. Klimatisierungseinheit nach Anspruch 17, dadurch gekennzeichnet, daß die Regelungseinheit wenigstens einen in den Lufteintritt und/oder Luftaustritt eingebrachten Istwertsensor aufweist, dessen Signale mit einem Sollwertgeber verglichen werden und abhängig von dem Ergebnis des Vergleichs eine Ansteuerung der Ventilatoranordnung vorgenommen wird.

19. Klimatisierungseinheit nach Anspruch 18, dadurch gekennzeichnet, daß der Sollwertgeber Teil einer Mikroprozessoreinheit ist, an die mehrere Istwert-Sensoren für unterschiedliche Datenerfassungen anschließbar sind.

20. Klimatisierungseinheit nach Anspruch 19, dadurch gekennzeichnet, daß die Istwertsensoren zur Temperatur-, Luftfeuchtigkeits- oder CO₂-Gehalt-Erfassung der ein- und/oder austretenden Luft ausgestaltet sind.

21. Klimatisierungseinheit nach einem der Ansprüche 16 bis 20, dadurch gekennzeichnet, daß dem Lufteintritt eine Filteranordnung zugeordnet ist.

22. Klimatisierungseinheit nach Anspruch 21, dadurch gekennzeichnet, daß die Filteranordnung auswechselbar in einem Gehäuse des Wärmetauschers angeordnet ist.
